# EUROPEAN PATENT SPECIFICATION

(11) **EP 1 309 035 B1**
(45) Date of publication and mention of the grant of the patent: **02.04.2008**
(21) Application number: 02292593.7
(22) Date of filing: 21.10.2002
(51) Int. Cl.: H01Q 13/10, H01Q 3/24, H01Q 21/08

(54) **Switched antenna**
Umschaltbare Antenne
Antenne commutée

(30) Priority: 29.10.2001 FR 0113955; 30.04.2002 FR 0205419
(43) Date of publication of application: 07.05.2003
(73) Proprietor: Thomson Licensing, 92100 Boulogne-Billancourt (FR)
(72) Inventor: Minard, Philippe, 35700 Rennes (FR); Louzir, Ali, 35000 Rennes (FR); Thudor, Franck, 35000 Rennes (FR); Le Bolzer, Françoise, 35000 Rennes (FR)
(74) Representative: Kerber, Thierry

(56) References cited:
- EP-A- 0 426 972
- EP-A- 0 685 901
- WO-A1-02/069446
- US-B1- 6 191 740
- HIROSE K ET AL: "DUAL-LOOP SLOT ANTENNA WITH SIMPLE FEED" ELECTRONICS LETTERS, IEE STEVENAGE, GB, vol. 25, no. 18, 31 August 1989 (1989-08-31), pages 1218-1219, XP000071688 ISSN: 0013-5194
- PATENT ABSTRACTS OF JAPAN vol. 015, no. 148 (E-1056), 15 April 1991 (1991-04-15) & JP 03 024804 A (NIPPON DENGIYOU KOSAKU KK), 1 February 1991 (1991-02-01)
- PATENT ABSTRACTS OF JAPAN vol. 015, no. 148 (E-1056), 15 April 1991 (1991-04-15) & JP 03 024805 A (NIPPON DENGIYOU KOSAKU KK), 1 February 1991 (1991-02-01)
- MINARD P.; LOUZIR A.: 'Annular Slot Antenna With 3-Order Radiation Pattern Diversity' 11TH SYMPOSIUM ON ANTENNA TECHNOLOGY AND APPLIED ELECTROMAGNETICS (ANTEM 2005) 15 June 2005, ST. MALO, FRANCE,
- DATABASE 'tangente (géomeétrie)' Retrieved from WWW.WIKIPEDIA.ORG
- MINARD P.; LOUZIR A.: 'Tangentially fed broadband annular slot antenna for WLAN applications' PROCEEDINGS OF 2002 INTERIM INTERNATIONAL SYMPOSIUM ON ANTENNAS AND PROPAGATION 26 November 2002 - 28 November 2002, YOKUSUKA, JAPAN, pages 279 - 282
- DUSSEUX M.T.: 'Etude d'antennes fentes annulaires imprimées. Applications : Antennes mélangeurses, réseaux. (PhD Thesis)', 04 May 1987, UNIVERSITE DE RENNES 1, FRANCE * page 121 - page 123 *

## Description

The present invention relates to an antenna system for the transmission of electromagnetic signals which can be used in the field of wireless transmissions, especially in the case of transmissions in a closed or semi-closed environment such as domestic environments, gymnasia, television studios, cinemas and theatres, or the like.

In known high bit rate wireless transmission systems, the signals transmitted by the transmitter reach the receiver along a plurality of different paths. When they are combined at the receiver, the phase differences between the various rays having travelled paths of different lengths give rise to an interference pattern likely to cause fading or significant degradation of the signal.

Furthermore, the location of the fading changes over time depending on changes in the environment such as the presence of new objects or the passage of people. This fading due to the multiple paths may lead to significant degradation, in terms of both the quality of the signal received and system performance.

To combat fading, the technique most often used is a technique with spatial diversity. This technique consists *inter alia* in using a pair of antennas with large spatial coverage such as two antennas of the patch type combined with a switch. The two antennas are separated by a length which must be greater than or equal to λ₀/2 where λ₀ is the wavelength corresponding to the operating frequency of the antenna. With this type of antenna, it is possible to demonstrate that the probability of having both antennas simultaneously in a region of fading is very low. Furthermore, by virtue of the switch, it is possible to select the branch connected to the antenna having the highest signal level by examining the signal received via a control circuit.

The above solution has the main drawback of being relatively bulky. Consequently, the applicant has proposed various alternative solutions to the solution described above. These solutions are applicable to antennas of the slot type supplied by a line/slot transition and which make it possible to obtain radiation diversity. Annular slot antennas are already known from, from example, the article "HIROSEK et Al "DUAL-LOOP SLOT ANTENNA WITH SIMPLE FEED" Electronics Letters IEEE STEVENAGE, GB, vol. 25, No. 18, 31 August 1989 - pages 1218-1218 which describes a dual-loop slot antenna with simple feed, the loops being connected together by a straight segment of slot. Switching, of feed-lines is described in WO-A-02/069446, but this document was published after the priority date of the present application.

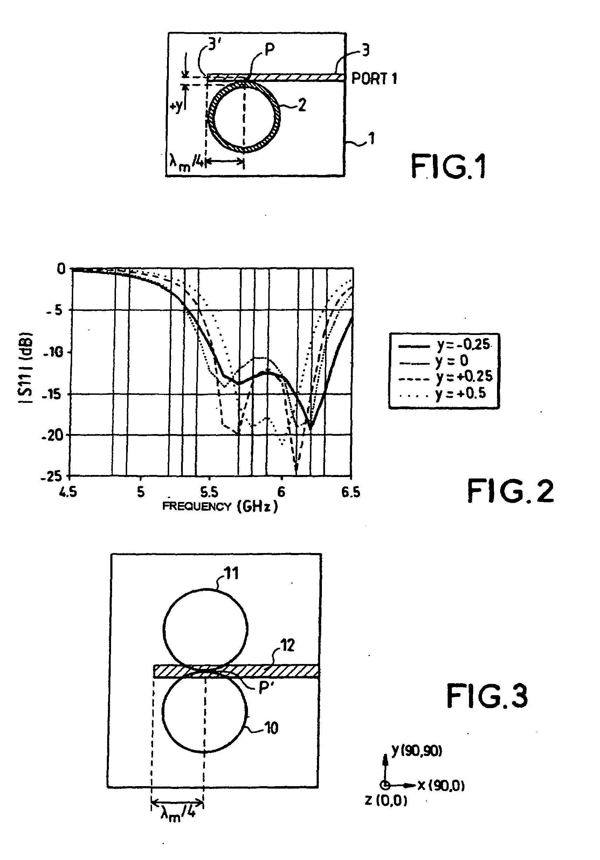

Research has also been carried out on an antenna of the slot type, such as an annular slot supplied by a tangential line/slot transition see for example T Dusseux "Etudes d'antennes fentes annulaires imprimées Applications :Antennes mélangeuses réseaux" Thèse de doctorat, Université de Rennes I, 1987. An antenna of this type is shown in Figure 1. This antenna is produced on a substrate 1 such as the Chukoh Flo CGP500 substrate where Er =2.6, TanD = 0.0018 and the height h = 0.76 mm. It comprises an annular slot 2, the perimeter of which is of the order of k'λₛ where k' is an integer and λₛ the wavelength guided in the slot.

As shown in Figure 1, this annular slot 2 is supplied by a line/slot transition which is substantially tangential at the point P. The line/slot transition consists of a microstrip line 3 made on the substrate 1, this microstrip line being at a distance y from the point of tangency to the slot 2. The length of the microstrip line 3 between its end 3' and the point P is about kλₘ/4. where k is an odd integer and λₘ the wavelength guided in the microstrip line. Furthermore, the characteristic impedance of the microstrip line is chosen so as to provide 50 ohms at the port 1. In this case, the coupling between the slot and the microstrip line is of electromagnetic type. To have maximum coupling between the exciting microstrip line and the slot, it is necessary to be placed in a short-circuit plane for the microstrip line. Thus, the coupling is optimized by adjusting the distance y between the slot 2 and the exciting line 3. Since the coupling takes place over a certain region on either side of the short-circuit plane for the microstrip line, broadband behaviour is obtained for the antenna excited in this way, as given in Table 1 below:

**Table 1**

| Y(mm) | -0.25 | 0 | +0.25 | +0.5 |
|---|---|---|---|---|
| Matched bandwidth (%) | 14.3 | 14 | 12 | 9.5 |

Figure 2 also shows the reflection coefficient S11 of an annular slot 2 as a function of the frequency for the various values of y given in Table 1. These curves give the matching of the annular slot to the said values. In this research, it is simply mentioned that two annular slots excited symmetrically by a tangential supply line radiate in phase opposition. This therefore results in radiation in the zero axis.

However, contrary to this assertion, the applicant has noticed that, in a structure of the above type with positioning of the microstrip line with respect to the slots so that one is in a short-circuit plane of the microstrip line, the two annular slots radiate in phase, which gives constructive radiation along the axis having linear polarization of very high purity.

The present invention therefore relates to an antenna system for the transmission of electromagnetic signals using slot-type antennas supplied by a line/slot transition as described above, making it possible to obtain compact antennas with a broad frequency band, and with linear polarization of very high purity.

The present invention also relates to a novel topology of antennas as described above, making it possible to obtain a compact device with radiation diversity.

The invention is defined in claim 1.

According to an additional feature of the invention, the length of each supply line between the component and the point of symmetry is about kλₘ/4 where k is an integer and λₘ the wavelength guided in the line, so as to restore an electrical short-circuit or open-circuit plane depending on the state of the component in the plane containing the points of symmetry. In this case, if the line measures kλₘ/4 where k=2, it is enough to reverse the diode state in order to find the same behaviour. Thus, for k=1, an on diode (CC) plus a quarter-wavelength line gives an open circuit CO at the transition and, for k=2, an off diode (CO) plus a half-wavelength line gives an open circuit.

According to the invention, the means for the transmission of electromagnetic waves of the slot antenna type supplied by a line/slot transition consist of a slot of annular or polygonal shape, it being possible for the polygonal shape to be a rectangle or a square or any other known polygonal shape.

Furthermore, the perimeter of the slot may have a wavelength of about k'λₛ where k' is an integer and λₛ the wavelength guided in the slot.

According to another additional feature of the present invention, the device further comprises a third supply line connected to a transmission means and electromagnetically coupled to the central electromagnetic wave transmission means by a line/slot transition.

According to preferred embodiments, the component consists of a diode, a transistor, an electronic switch and a microelectromechanical system. Furthermore, the supply lines are produced using microstrip technology or coplanar technology.

Other features and advantages of the present invention will become apparent on reading various embodiments, this reading being carried out with reference to the appended drawings, in which:
Figure 1, already described, is a schematic top plan view of an annular slot supplied tangentially according to the prior art.
Figure 2 shows curves giving the reflection coefficient S11 as a function of the frequency of an annular slot for various values of y, for the device of Figure 1.
Figure 3 is a schematic top plan view of two annular slots with tangential supply.
Figures 3A and 3B are, respectively, a curve giving the reflection coefficient S11, as a function of the frequency and the radiation pattern of an antenna system according to Figure 3.
Figure 4 is a schematic top plan view of a topology of an antenna system according to a first embodiment of the present invention.
Figure 5 is a curve giving the reflection coefficient S11 as a function of the frequency for the topology shown in Figure 4.
Figure 6 shows the radiation of the three states of the antenna system of Figure 4.
Figure 7 is a schematic top plan view of another embodiment of the present invention.
Figure 8 is a curve giving the reflection coefficients of the antenna of Figure 7 as a function of the frequency when the diodes 25 and 26 of Figure 7 are in the on state, and the diode 33 in the off state, and
Figure 9 shows the radiation pattern of the antenna of Figure 7 when the diodes 25 and 26 of Figure 7 are in the on state, and the diode 33 in the off state.

To simplify the description, the same elements bear the same references. In the present invention, the term "electromagnetic wave transmission means" refers to any means capable of transmitting and/or of receiving electromagnetic waves, these means being known by the term "antenna".

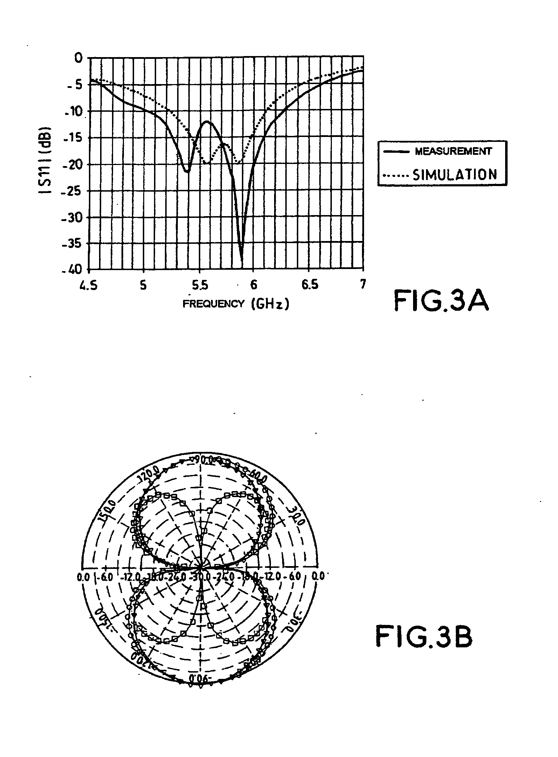

An example making it possible to obtain a broadband antenna system with very pure linear polarization will first of all be described with reference to Figures 3, 3A et 3B. As shown in Figure 3, the antenna system comprises slot-type antennas consisting of two annular slots 10, 11 placed on each side of a microstrip supply line 12 which is tangent at a point P' to the two slots 10 and 11. In this case, the two annular slots are supplied by a line/slot transition giving magnetic coupling between the supply line (12) and the slots. The length of the supply line between its end away from the input port and the point of tangency is about kλₘ/4 where k is an odd integer and λₘ the wavelength guided by the microstrip line.

As in the case of Figure 1, the perimeter of each annular slot 10, 11 is substantially equal to k'λₛ where k' is an integer and λₛ the wavelength guided in the slot. With this structure, since the elliptical polarizations of each slot 10, 11 located on each side of the microstrip line 12 are of opposite handedness, they give rise to linear polarization of very high purity, especially in the axis of the antenna. In this case, in order to preserve the central frequency of the antenna, the perimeter of each annular slot is slightly less than k'λₛ where λₛ is the wavelength guided in the isolated slot.

Figure 3B shows the radiation patterns of the antenna system of Figure 3 in the E and H planes at a central operating frequency of 5.7 GHz. Since the system is produced on the same type of substrate as the system of Figure 1, it can be seen that the cross polarization is less than -19.1 dB, especially in the axis of the antenna.

Figure 3A shows the reflection coefficient S11 of the system of Figure 3 as a function of the frequency for a measurement and for a simulation. The antenna system is matched at -10 dB over 15.7% in simulation and 22% in measurement.

This type of device may be produced, for example, by using triplate technology on two substrates of permittivity εᵣ₁ and εᵣ₂. Thus, the two annular slots are etched on the top face of the first substrate. The supply line, made in microstrip technology, is produced between the two substrates and the earth plane is formed on the bottom face of the second substrate.

According to an additional feature of the invention, the two annular slots may be provided with perturbations transforming in a known manner a linear polarization into a circular one. More specifically, each annular slot is provided with two diagonally opposed perturbations, the perturbations being positioned at around 45 or 135 degrees from the plane passing through the centre of said means of transmission and the first point of symmetry. The perturbations may be done by cuts or by projections of various shapes, as known from the art.

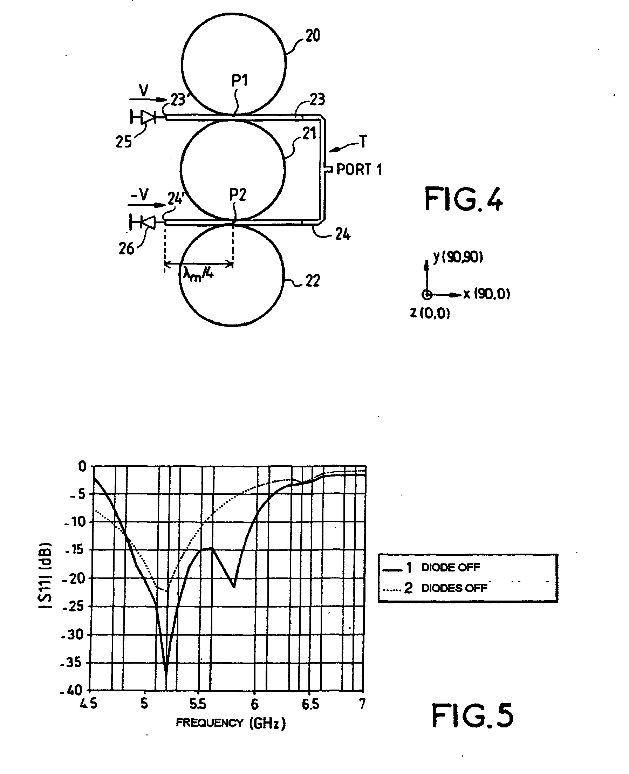

An embodiment of the present invention making it possible to obtain radiation diversity will next be described with reference to Figures 4, 5 and 6. This radiation mode uses the basic structure described above.

As shown in Figure 4, the novel topology of the electromagnetic signal transmission system consists of three antennas 20, 21, 22 of the annular slot type. These slots are tangent in pairs at the points P1 and P2. More specifically, the annular slots 20 and 21 are tangent at the point P1 while the slots 21 and 22 are tangent at the point P2. The points P1 and P2 are therefore points of symmetry through which a plane, more particularly a plane of tangency, may pass.

As shown in Figure 4, the slots 20, 21, 22 are supplied by microstrip lines 23, 24 which are respectively in the planes of tangency passing through the points P1 and P2.

As shown in Figure 4, the microstrip supply lines 23, 24 are joined by a T-shaped junction to the port 1 for connection with a supply circuit (not shown).

Furthermore, the length of line 23 or 24 between the point P1 or P2 and the end 23' or 24' away from the port 1 is preferably about kλₘ/4 where k is an integer and λₘ the wavelength guided in the supply line.

As shown in Figure 4, an electronic component making it possible to simulate a short circuit or an open circuit at the end of one of the lines and an open circuit or a short circuit at the end of the other line is mounted at the end of each of the lines 23, 24. More specifically, one diode 25 is reverse-mounted between the end 23' and the earth, while one diode 26 is forward-mounted between the end 24' and the earth. This mounting makes it possible to switch the radiation patterns between three states depending on the bias state of the diodes 25 and 26, this bias being produced in a manner known to a person skilled in the art. The various switching states are shown in Table 2 below:

**Table 2**

| | Diode state | |
|---|---|---|
| Applied voltage | Diode 25 | Diode 26 |
| -V | Off | On |
| 0 | Off | Off |
| +V | On | Off |

From the structure of Figure 4, a curve giving a reflection coefficient S11 as a function of the frequency is obtained, as shown in Figure 5. On the basis of this curve, it will be noted that the matched bandwidth at -10 dB is 22% when a single diode is off, and 17.8% when both diodes are off.

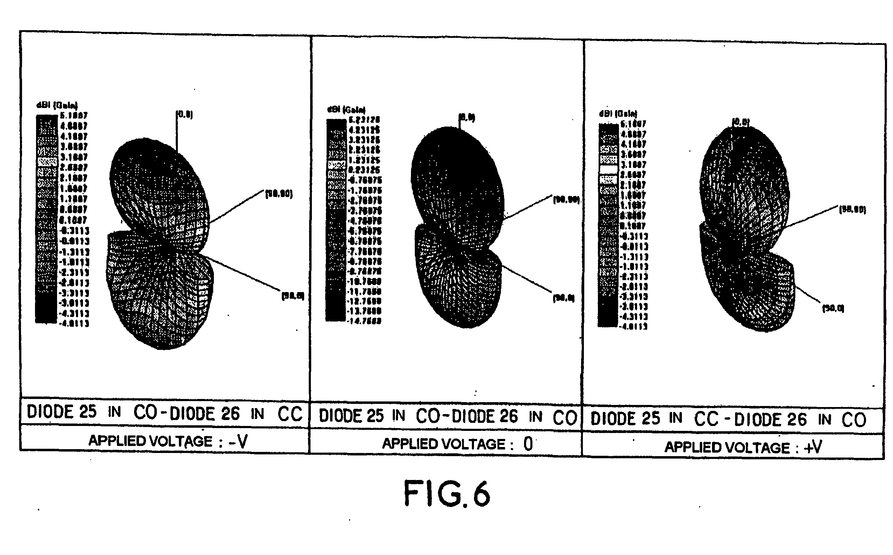

Furthermore, Figure 6 shows the three radiation states of the antenna according to the states of two ideal diodes at an operating frequency of 5.4 GHz. Thus, radiation diversity of order 3 is obtained for the antenna device.

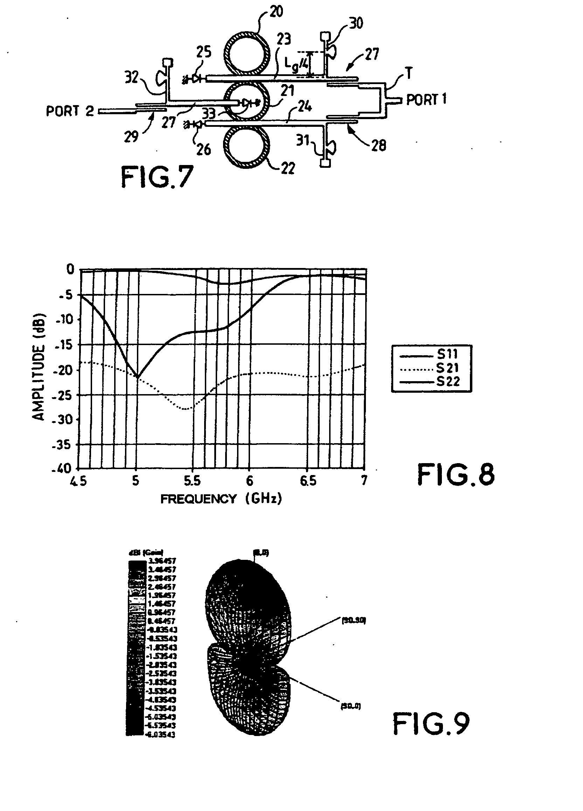

To obtain a transmission channel with the antenna topology shown in Figure 4, it is proposed, as shown in Figure 7, to supply the central annular slot, that is to say the slot 21, by a microstrip line 27 positioned so as to produce a conventional line/slot transition as described by Knorr. This line is terminated by a diode 33 restoring a short circuit at the end of the line 27 in receiving mode.

To ensure maximum isolation between transmission and reception, the two diodes 25, 26 must be in the on state, that is to say have a short circuit at the end of the microstrip lines 23 and 24 in transmission mode, and the diode 33 must be in the off state, that is to say have an open circuit CO at the end of the line 27 in transmission mode. In this case, the system shown in Figure 7 has four operating states, as mentioned in Table 3 below :

**Table 3**

| | | Diode state | | |
|---|---|---|---|---|
| | | Diode 25 | Diode 26 | Diode 33 |
| Rx | State 1 | Off | On | On |
| | State 2 | Off | Off | On |
| | State 3 | On | Off | On |
| Tx | State 4 | On | On | Off |

The control device making it possible to manage these four states is provided by a device independently controlling each of the three diodes. This control device consists, for example, of block devices 28', 28 mounted between the T-junction and the supply lines 23, 24. The block devices consist of DC-blocks of known type. A DC-block 29 is also provided between the line 27 and the port 2. Furthermore, line ends or "stubs" 30, 31, 32 are mounted between the respective lines 32, 24 and 27 and the terminal for biasing the various diodes 25, 26 and 33. The length of each radial line end is such that an open circuit is restored at the intersection point. In this way, the bias voltage is provided to each of the diodes, without disturbing the radiofrequency RF (transparency condition). Moreover, the DC-block device makes it possible to filter the DC current at the antenna access.

With the system shown in Figure 7, a curve giving the amplitude of the parameters S of the device as a function of the transmission frequency is obtained, that is when the diodes 25 and 26 are in short circuit in Figure 8. It will be noted that, in this case, the matched bandwidth of the transmission channel is more than 22%.

Furthermore, in transmission, a radiation pattern is obtained for the device, as shown in Figure 9. On looking at the various radiation patterns, it will be noted that a high quality of linear polarization is obtained in the axis of the antenna. Furthermore, a good level of isolation is obtained between transmission and reception and the same polarization for transmission and reception. Furthermore, this compact antenna stretcher provides radiation pattern diversity of order 3.

It is obvious to a person skilled in the art that the above embodiments are given by way of example and may be modified in many ways. Thus, the slot may have a shape other than an annular shape; it may have a polygonal shape, that is a square or rectangular shape or the like. The supply lines may be produced in microstrip technology or in coplanar technology. The diodes may be replaced by other components such as transistors, electronic switches and microelectromechanical systems.

## Claims

1. - Antenna system for the transmission of electromagnetic signals comprising:
- a first slot type antenna (10) consisting of an annular slot or polygonal slot,
- a second slot type antenna (11) consisting of an annular slot or polygonal slot, and a first supply line (12) supplying the first and second slot type antennas by a tangential line/slot transition,
said first and second slot type antennas being symmetrically positioned on each side of said first supply line and coupled by a line/slot transition giving magnetic coupling between the first supply line (12) and each slot type antenna, **characterized in that** it further comprises:
- a third slot type antenna (22) consisting of an annular slot or polygonal slot,
- a second supply line (24) connected in common with the first supply line to means for processing signals,
- the third slot type antenna and one of the first and second slot type antennas being symmetrically positioned on each side of said second supply line and being coupled by a line/slot transition giving magnetic coupling between the second supply line and each slot type antenna,
the first and second supply lines having each a free end, the free ends being connected to a component (25, 26) simulating alternately a short circuit at one free end and an open circuit at the other free end.

2. - System according to Claim 1, **characterized in that** the length of the supply line (23',24') between the component and the transition is about kλₘ/4 where k is an odd integer and λₘ the wavelength guided in the line, so as to restore an electrical short-circuit or open-circuit plane depending on the state of the component at the level of the transition.

3. - System according to any one of Claims 1 or 2, **characterized in that** the perimeter of the slot has a wavelength of about k'λₛ where k' is an integer and λₛ the wavelength guided in the slot.

4. - System according to Claim 1, **characterized in that** it further comprises a third supply line (27) connected to the center slot type antennas by a line/slot transition..

5. - System according to Claim 4, **characterized in that**, in transmission mode, the electronic components which are at the end of the first and second supply lines are supplied in order to simulate a short circuit.

6. - System according to any one of Claims 1 to 5, **characterized in that** the component (25, 20, 30) consists of a diode, a transistor, an electronic switch and a microelectromechanical system..

7. - System according to any one of Claims 1 to 6, **characterized in that** the supply lines consist of microstrip lines or coplanar lines.

8. - System according to any one of claims 1 to 7, **characterized in that** the first and second slot antennas are each provided with two perturbations, the perturbations being positioned at around 45 or 135 degrees from the plane passing through the centre of said slot antenna and the transition.

## Patentansprüche

1. Antennensystem zur Übertragung elektromagnetischer Signale, umfassend:
eine erste Antenne (10) des Schlitztyps, die aus einem ringförmigen Schlitz und einem polygonalen Schlitz besteht,
eine zweite Antenne (11) des Schlitztyps, die aus einem ringförmigen Schlitz oder polygonalen Schlitz besteht, und wobei eine erste Versorgungsleitung (12) die erste und zweite Antenne des Schlitztyps durch einen tangentialen Übergang von Leitung/Schlitz versorgt,
wobei die erste und zweite Antenne des Schlitztyps symmetrisch auf jeder Seite der ersten Versorgungsleitung angeordnet und durch einen Übergang von Leitung/Schlitz, der magnetische Kopplung zwischen der ersten Versorgungsleitung (12) und jeder Antenne des Schlitztyps ergibt, gekoppelt sind, **dadurch gekennzeichnet, daß** es ferner folgendes umfaßt:
eine dritte Antenne (22) des Schlitztyps, die aus einem ringförmigen Schlitz oder polygonalen Schlitz besteht,
eine zweite Versorgungsleitung (24), die gemeinsam mit der ersten Versorgungsleitung mit Mitteln zum
Verarbeiten von Signalen verbunden ist,
wobei die dritte Antenne des Schlitztyps und eine der
ersten und zweiten Antenne des Schlitztyps symmetrisch auf jeder Seite der zweiten Versorgungsleitung angeordnet und durch einen Übergang von Leitung/Schlitz, der magnetische Kopplung zwischen der zweiten Versorgungsleitung und jeder Antenne des Schlitztyps ergibt, gekoppelt sind,
wobei die erste und zweite Versorgungsleitung jeweils ein freies Ende aufweisen, wobei die freien Enden mit einer Komponente (25, 26) verbunden sind, die alternierend einen Kurzschluß an einem freien Ende und einen Leerlauf an dem anderen freien Ende simuliert.

2. System nach Anspruch 1, **dadurch gekennzeichnet, daß** die Länge der Versorgungsleitung (23', 24') zwischen der Komponente und dem Übergang etwa kλₘ/4 beträgt, wobei k eine ungerade ganze Zahl und Am die in der Leitung geführte Wellenlänge ist, um so abhängig von dem Zustand der Komponente auf der Ebene des Übergangs eine elektrische Kurzschluß- oder Leerlaufebene wiederherzustellen.

3. System nach einem der Ansprüche 1 oder 2, **dadurch gekennzeichnet, daß** der Perimeter des Schlitzes eine Wellenlänge von etwa k'λₛ aufweist, wobei k' eine ganze Zahl und λₛ die in dem Schlitz geführte Wellenlänge ist.

4. System nach Anspruch 1, **dadurch gekennzeichnet, daß** es ferner eine dritte Versorgungsleitung (27) umfaßt, die durch einen Übergang von Leitung/Schlitz mit den mittleren Antennen des Schlitztyps verbunden ist.

5. System nach Anspruch 4, **dadurch gekennzeichnet, daß** die elektronischen Komponenten, die sich an dem Ende der ersten und zweiten Versorgungsleitung befinden, versorgt werden, um einen Kurzschluß zu simulieren.

6. System nach einem der Ansprüche 1 bis 6, **dadurch gekennzeichnet, daß** die Komponente (25, 20, 30) aus einer Diode, einem Transistor, einem elektronischen Schalter und einem mikroelektromechanischen System besteht.

7. System nach einem der Ansprüche 1 bis 6, **dadurch gekennzeichnet, daß** die Versorgungsleitungen aus Mikrostreifenleitungen oder koplanaren Leitungen bestehen.

8. System nach einem der Ansprüche 1 bis 7, **dadurch gekennzeichnet, daß** die erste und zweite Schlitzantenne jeweils mit zwei Perturbationen ausgestattet sind, wobei die Perturbationen ungefähr bei 45 oder 135 Grad von der durch die Mitte der Schlitzantenne und des Übergangs verlaufenden Ebene angeordnet sind.

## Revendications

1. - Système d'antennes pour la transmission de signaux électromagnétiques comprenant :
- une première antenne de type fente (10) constituée d'une fente annulaire ou d'une fente orthogonale,
- une seconde antenne de type fente (11) constituée d'une fente annulaire ou d'une fente polygonale, et une première ligne d'alimentation (12) alimentant les première et seconde antennes de type fente par une transition ligne-fente tangentielle,
lesdites première et seconde antennes de type fente étant positionnées symétriquement de chaque côté de ladite première ligne d'alimentation et couplées par une transition ligne-fente donnant un couplage magnétique entre la première ligne d'alimentation (12) et chaque antenne de type fente,
**caractérisé en ce qu'**il comporte de plus :
- une troisième antenne de type fente (22) constituée d'une fente annulaire ou d'une fente polygonale,
- une seconde ligne d'alimentation (24) connectée en commun avec la première ligne d'alimentation à des moyens de traitement des signaux,
- la troisième antenne de type fente et une des première et seconde antennes de type fente étant positionnées symétriquement de chaque côté de ladite seconde ligne d'alimentation et étant couplée par une transition ligne-fente donnant un couplage magnétique entre la seconde ligne d'alimentation et chaque antenne de type fente,
les première et seconde lignes d'alimentation ayant chacune une extrémité libre, les extrémités libres étant connectées à un composant (25, 26) simulant alternativement un court-circuit à une extrémité libre et un circuit ouvert à l'autre extrémité libre.

2. - Système selon la revendication 1, **caractérisé en ce que** la longueur de la ligne d'alimentation (23', 24') entre le composant et la transition est environ kλm/4 où k est un entier impair et λm la longueur d'onde guidée dans la ligne, de manière à restaurer un plan électrique de court-circuit ou de circuit ouvert dépendant de l'état du composant au niveau de la transition.

3. - Système selon l'une quelconque des revendications 1 ou 2, **caractérisé en ce que** le périmètre de la fente a une longueur d'environ k'λs où k' est un entier et λs la longueur d'onde guidée dans la fente.

4. - Système selon la revendication 1, **caractérisé en ce qu'**il comporte de plus une troisième ligne d'alimentation (27) connectée aux antennes centrales de type fente par une transition ligne-fente.

5. - Système selon la revendication 4, **caractérisé en ce que**, dans le mode transmission, les composants électroniques qui se trouvent aux extrémités des première et seconde lignes d'alimentation sont alimentés afin de simuler un court-circuit.

6. - Système selon l'une quelconque des revendications 1 à 5, **caractérisé en ce que** le composant (25, 20, 30) est constitué par une diode, un transistor, un commutateur électronique et un système micro-électromécanique.

7. - Système selon l'une quelconque des revendications 1 à 6, **caractérisé en ce que** les lignes d'alimentation consistent en des lignes microruban ou des lignes coplanaires.

8. - Système selon l'une quelconque des revendications 1 à 7, **caractérisé en ce que** les première et seconde antennes fente sont chacune munies de deux perturbations, les perturbations étant positionnées à environ 45 ou 135 degrés par rapport au plan passant par le centre de ladite antenne fente et la transition.
